# EUROPEAN PATENT APPLICATION

(11) **EP 2 500 855 A1**
(43) Date of publication of application: **19.09.2012**
(21) Application number: 10839354.7
(22) Date of filing: 20.12.2010
(51) Int. Cl.: G06Q 30/00, G06Q 50/00

(54) **ADVERTISEMENT DISPLAY SERVER, ADVERTISEMENT DISPLAY METHOD, PROGRAM FOR ADVERTISEMENT DISPLAY SERVER, AND STORAGE MEDIUM**

(30) Priority: 22.12.2009 JP 2009290191
(71) Applicant: Rakuten, Inc., Tokyo 140-0002 (JP)
(72) Inventor: TAKAMI Shinya, Tokyo 140-0002 (JP)
(74) Representative: HOFFMANN EITLE
(86) International application number: PCT/JP2010/072905
(87) International publication number: WO 2011/078124

(57) **Abstract**

An advertisement display server device, an advertisement display method, a program for advertisement display server device, and a recording medium for giving an application chance to a plurality of advertisers and enhancing advertisers' convenience are provided.

An advertisement keyword is received from advertiser terminal devices 20, an application unit price per application unit of the advertisement keyword is calculated based on the number of application units applied for the advertisement keyword from plural advertiser terminals 25, information on the number of application units applied for the advertisement keyword at the application unit price is received from the advertiser terminal devices, when a search keyword is received, the advertisement keyword associated with the search keyword is decided, the number of application units and advertisement contents stored in association with the decided advertisement keyword are extracted, and a display priority order for displaying the advertisement contents is decided based on the number of application units.

## Description

### TECHNICAL FIELD

The present invention relates to an advertisement display server device, an advertisement display method, and a program for advertisement display server device for Internet advertisements. It particularly relates to a technical field of an advertisement display server device, an advertisement display method, a program for advertisement display server device, and a recording medium for making advertisements associated with a keyword searched by a search engine.

### BACKGROUND ART

Internet advertisements include various forms such as banner advertisement, e-mail advertisement, search-related ads and affiliate advertisement, and have developed depending on an advertisement form, an advertisement distribution method, and an advertisement billing method. Particularly, the search-related ads are devised as to how to relate advertisements to the search results by the search engine. For example, Patent Document 1 discloses a search engine device that generates, in response to a user's keyword input, a search result list in which search listings of multiple advertisers coinciding with the keyword are arranged in descending order of search listing bid, and provides it to the user, and when the user selects a search listing of an advertiser on the search result list, can automatically charge the bid on the account of the advertiser.

### PRIOR ART DOCUMENTS

### PATENT DOCUMENT

Patent Document 1: Japanese Patent Application National Publication No. 2003-501729

### SUMMARY OF THE INVENTION

### PROBLEMS TO BE SOLVED BY THE INVENTION

In the conventional technique, however, since the search result list in descending order of bid is generated, advertisers concentrate on a specific keyword, and thus competitions become fiercer or the bid becomes too much, and consequently many advertisers are difficult to participate in the bidding. Therefore, the participating was so inconvenient for many advertisers.

The present invention has been made in terms of the problem, and an exemplary object thereof is to provide an advertisement display server device, an advertisement display method, a program for advertisement display server device, and a recording medium that give a chance of application to multiple advertisers and enhance convenience of the advertisers.

### MEANS FOR SOLVING THE PROBLEMS

In order to solve the problem, the invention according to a first aspect is an advertisement display server device connected to a plurality of advertiser terminal devices and a plurality of user terminal devices via a network, comprising: an advertisement keyword receiving means that receives an advertisement keyword from the advertiser terminal devices; an application unit price calculating means that calculates an application unit price which is a price per application unit of the advertisement keyword based on the number of application units applied for the advertisement keyword from the advertiser terminal devices; an application unit price transmitting means that transmits information on the application unit price to the advertiser terminal devices; an application unit number receiving means that receives information on the number of application units applied for the advertisement keyword at the application unit price from the advertiser terminal devices; a search keyword receiving means that receives a search keyword from the user terminal devices; an advertisement extracting means that when receiving the search keyword, decides an advertisement keyword associated with the search keyword with reference to a storing means that stores the advertisement keyword, the number of application units, and advertisement contents in a mutually-associated manner, and extracts the number of application units and advertisement contents stored in association with the decided advertisement keyword; and a display priority order deciding means that decides a display priority order for displaying the extracted advertisement contents based on the number of application units.

The invention according to a second aspect is the advertisement display server device according to the first aspect, further comprising: an advertisement list generating means that generates an advertisement list in which the extracted advertisement contents are arranged in the display priority order; a search result page generating means that generates a search result page in which the advertisement list is added to search results based on the search keyword; and a search result transmitting means that transmits the search result page to the user terminal devices.

The invention according to a third aspect is the advertisement display server device according to the second aspect, wherein the advertisement list generating means arranges a predetermined number of advertisement contents in the advertisement list, the advertisement display server device further comprising: an application unit number subtracting means that when advertisement contents are arranged in the advertisement list, subtracts the number of application units stored in the storing means in association with the advertisement contents arranged in the advertisement list.

The invention according to a fourth aspect is the advertisement display server device according to the third aspect, wherein the application unit number subtracting means decides the number of units to be subtracted from the number of application units in response to the display priority order.

The invention according to a fifth aspect is the advertisement display server device according to any one of the first to fourth aspects, further comprising: an application unit number limiting means that limits the number of application units applicable for each advertisement keyword.

The invention according to a sixth aspect is the advertisement display server device according to any one of the first to fifth aspects, wherein the application unit price calculating means calculates the application unit price based on the total number of application units from the advertiser terminal devices.

The invention according to a seventh aspect is the advertisement display server device according to the sixth aspect, wherein the application unit price calculating means increases the application unit price in response to an increase in the total number of application units.

The invention according to an eighth aspect is the advertisement display server device according to any one of the first to seventh aspects, wherein the application unit price calculating means calculates the application unit price based on the number of application units and a search frequency of the advertisement keyword.

The invention according to a ninth aspect is the advertisement display server device according to any one of the first to eighth aspects, further comprising: an application period transmitting means that transmits information on an application deadline of the keyword to the advertiser terminal devices.

The invention according to a tenth aspect is the advertisement display server device according to any one of the first to ninth aspects, further comprising: a storing means that stores the advertisement keyword, the number of application units, and advertisement contents in a mutually-associated manner.

The invention according to an eleventh aspect is an advertisement display method of an advertisement display server device connected to a plurality of advertiser terminal devices and a plurality of user terminal devices via a network, comprising: an advertisement keyword receiving step of receiving an advertisement keyword from the advertiser terminal devices; an application unit price calculating step of calculating an application unit price which is a price per application unit of the advertisement keyword based on the number of application units applied for the advertisement keyword from the advertiser terminal devices; an application unit price transmitting step of transmitting information on the application unit price to the advertiser terminal devices; an application unit number receiving step of receiving information on the number of application units applied for the advertisement keyword at the application unit price from the advertiser terminal devices; a search keyword receiving step of receiving a search keyword from the user terminal devices; an advertisement extracting step of, when receiving the search keyword, deciding an advertisement keyword associated with the search keyword with reference to a storing means that stores the advertisement keyword, the number of application units, and advertisement contents in a mutually-associated manner, and extracting the number of application units and advertisement contents stored in association with the decided advertisement keyword; and a display priority order deciding step of deciding a display priority order for displaying the extracted advertisement contents based on the number of application units.

The invention according to a twelfth aspect is a program for an advertisement display server device connected to a plurality of advertiser terminal devices and a plurality of user terminal devices via a network, which causes a computer to function as: an advertisement keyword receiving means that receives an advertisement keyword from the advertiser terminal devices; an application unit price calculating means that calculates an application unit price which is a price per application unit of the advertisement keyword based on the number of application units applied for the advertisement keyword from the advertiser terminal devices; an application unit price transmitting means that transmits information on the application unit price to the advertiser terminal devices; an application unit number receiving means that receives information on the number of application units applied for the advertisement keyword at the application unit price from the advertiser terminal devices; a search keyword receiving means that receives a search keyword from the user terminal devices; an advertisement extracting means that when receiving the search keyword, decides an advertisement keyword associated with the search keyword with reference to a storing means that stores the advertisement keyword, the number of application units, and advertisement contents in a mutually-associated manner, and extracts the number of application units and advertisement contents stored in association with the decided advertisement keyword; and a display priority order deciding means that decides a display priority order for displaying the extracted advertisement contents based on the number of application units.

The invention according to a thirteenth aspect is a computer-readable recording medium recording therein a program for an advertisement display server device connected to a plurality of advertiser terminal devices and a plurality of user terminal devices via a network, the program causing a computer to function as: an advertisement keyword receiving means that receives an advertisement keyword from the advertiser terminal devices; an application unit price calculating means that calculates an application unit price which is a price per application unit of the advertisement keyword based on the number of application units applied for the advertisement keyword from the advertiser terminal devices; an application unit price transmitting means that transmits information on the application unit price to the advertiser terminal devices; an application unit number receiving means that receives information on the number of application units applied for the advertisement keyword at the application unit price from the advertiser terminal devices; a search keyword receiving means that receives a search keyword from the user terminal devices; an advertisement extracting means that when receiving the search keyword, decides an advertisement keyword associated with the search keyword with reference to a storing means that stores the advertisement keyword, the number of application units, and advertisement contents in a mutually-associated manner, and extracts the number of application units and advertisement contents stored in association with the decided advertisement keyword; and a display priority order deciding means that decides a display priority order for displaying the extracted advertisement contents based on the number of application units.

According to the present invention, the advertisement keyword is received from the advertiser terminal devices, the application unit price which is a price per application unit of the advertisement keyword is calculated based on the number of application units applied for the advertisement keyword from the advertiser terminal devices, the information on the application unit price is transmitted to the advertiser terminal devices, the information on the number of application units applied for the advertisement keyword at the application unit price is received from the advertiser terminal devices, the search keyword is received from the user terminal devices, when the search keyword is received, the advertisement keyword associated with the search keyword is decided with reference to the storing means that stores the advertisement keyword, the number of application units and the advertisement contents in a mutually-associated manner, the number of application units and the advertisement contents stored in association with the decided advertisement keyword are extracted, the display priority order for displaying the extracted advertisement contents is decided based on the number of application units so that the unit price per application unit varies based on the number of application units applied from the advertiser terminal devices and the display priority order of the advertisements is decided by the number of application units not by the bid, and thus even when funds for the application are not enough, if the advertiser obtains a larger number of application units at a lower unit price, the advertiser can obtain the advertisement keyword having a higher display priority order. Therefore, it is possible to give the chance of application to multiple advertisers and to enhance convenience of the advertisers.

### BRIEF DESCRIPTION OF THE DRAWINGS

FIG. 1 is a schematic diagram showing an exemplary outline structure of an advertisement display system according to a first embodiment of the present invention.
FIG. 2 is a block diagram showing an exemplary outline structure of an advertisement display server device of FIG. 1.
FIG. 3 is a flowchart showing an exemplary advertisement keyword application by the advertisement display server device of FIG. 1.
FIG. 4 is a schematic diagram showing an exemplary first input form in an advertiser terminal device of FIG. 1.
FIG. 5 is a schematic diagram showing an exemplary second input form in the advertiser terminal device of FIG. 1.
FIG. 6 is a flowchart showing an exemplary advertisement list generation by the advertisement display server device of FIG. 1.
FIG. 7 is a schematic diagram showing an exemplary search result page in a user terminal device of FIG. 1.
FIG. 8 is a schematic diagram showing a variant of the second input form in the advertiser terminal device of FIG. 1.
FIG. 9 is a flowchart showing an exemplary advertisement list generation by an advertisement display server device according to a second embodiment of the present invention.
FIG. 10 is a schematic diagram showing a report of an advertisement display result.

### BEST MODES FOR CARRYING OUT THE INVENTION

Best modes for carrying out the present invention will be described below with reference to the drawings.

### (First embodiment)

A schematic structure and functions of an advertisement display system according to a first embodiment of the present invention will be first described with reference to the drawings.

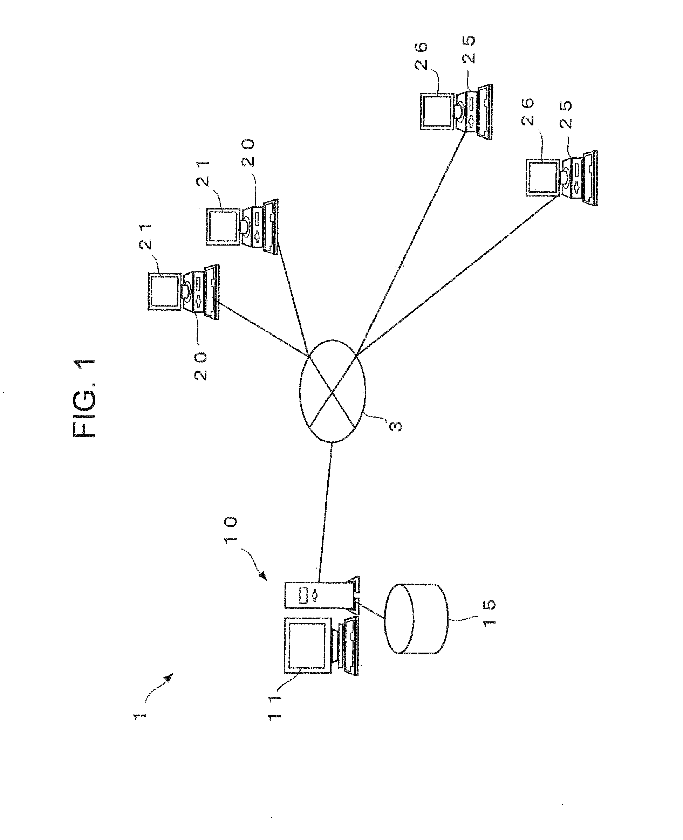

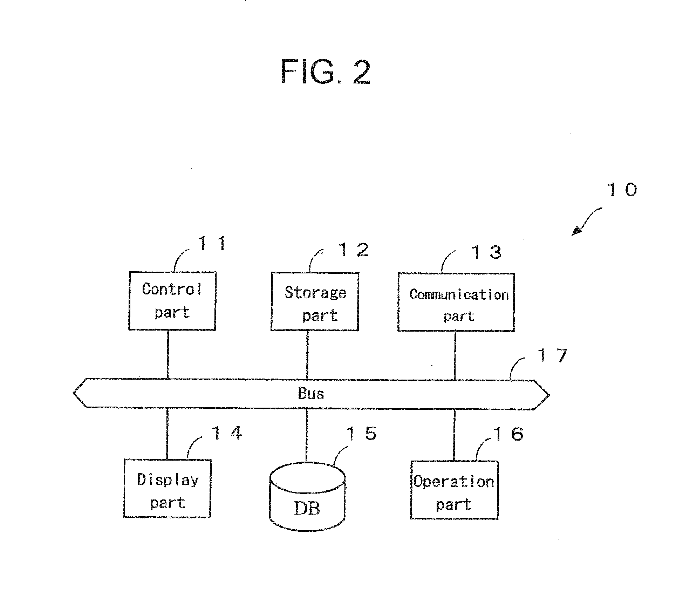

FIG. 1 is a schematic diagram showing an outline structure example of the advertisement display system according to the embodiment of the present invention. FIG. 2 is a block diagram showing an exemplary outline structure of an advertisement display server device.

As shown in FIG. 1, the advertisement display system 1 comprises an advertisement display server device 10 that generates search results based on a keyword and a Web page for displaying an advertisement, an advertiser terminal device 20 on which an advertiser applies for an advertisement keyword, and a user terminal device 25 on which a user makes a search based on a keyword.

The advertisement display server device 10, the advertiser terminal device 20 and the user terminal device 25 are connected to a network 3 such as the Internet.

As shown in FIG. 2, the advertisement display server device 10 functioning as a computer comprises a control part 11 that controls the advertisement display server device 10 and executes programs, a storage part 12 that holds, for example, halfway results of the control part 11, a communication part 13 that is connected to the network 3 and makes communication with the advertiser terminal device 20 and the user terminal device 25, a display part 14 that displays such as images and texts, a database 15 that stores advertisement contents therein, and an operation part 16 that is configured of a keyboard, a mouse and the like, and the parts are mutually connected via a bus 17.

The advertisement display server device 10 generates an input form for applying for an advertisement keyword from the advertiser terminal device 20, receives the advertisement keyword, has a search engine function, and receives a search keyword from the user terminal device 25 to transmit the search results added with information on the advertisement. The searching based on the search keyword may be functionally distributed in search engine servers.

The control part 11 has a CPU (Central Processing Unit), calculates a price per advertisement keyword application unit (application unit price), extracts an advertiser who has applied for the advertisement keyword associated with the search keyword, and advertisement contents, decides a display priority order for displaying the advertisement contents, generates an advertisement list arranged in the display priority order, and generates a search result page in which the advertisement list is added to the search results based on the search keyword.

The storage part 12 has RAM (Random Access Memory), ROM (Read Only Memory) and the like.

The communication part 13 makes communication with the advertiser terminal device 20 and the user terminal device 25 via the network 3. Under control of the control part 11, the communication part 13 receives the advertisement keyword from the advertiser terminal device 20, transmits information on the application unit price to the advertiser terminal device 20, receives information on the number of application units applied for the advertisement keyword at the application unit price from the advertiser terminal device 20, receives the search keyword from the user terminal device 25, and transmits the search result page to the user terminal device 25.

The display part 14 is configured of CRT (Cathode Ray Tube), liquid crystal display element, EL (Electro Luminescence) element, or the like.

The database 15 is formed of a hard disk, stores advertisement keywords and advertisement contents therein, and constructs a database for the search engine therein.

The advertiser terminal device 20 may be a personal computer or portable terminal, and has a display part 21 like the display part 14. The user terminal device 25 may be a personal computer or portable terminal, and has a display part 26 like the display part 14.

The operational example of the present embodiment will be described below with reference to the drawings.
The operational example of an advertisement keyword application in the advertisement display server device 10 will be first described.

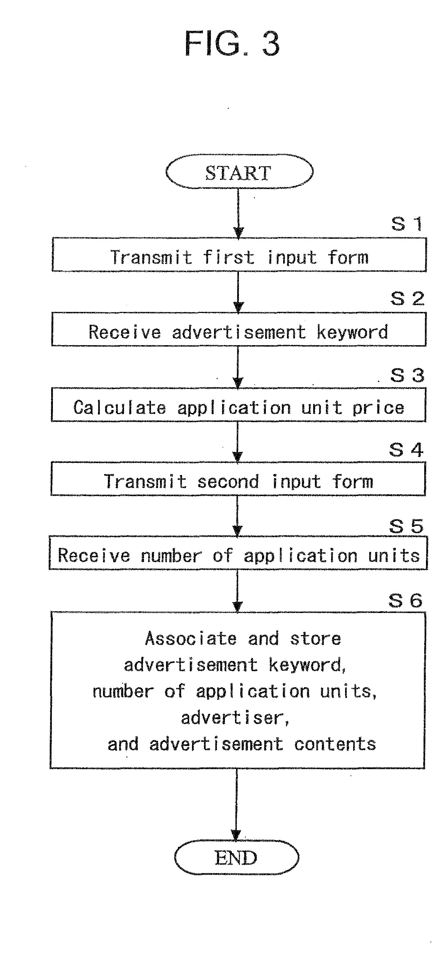

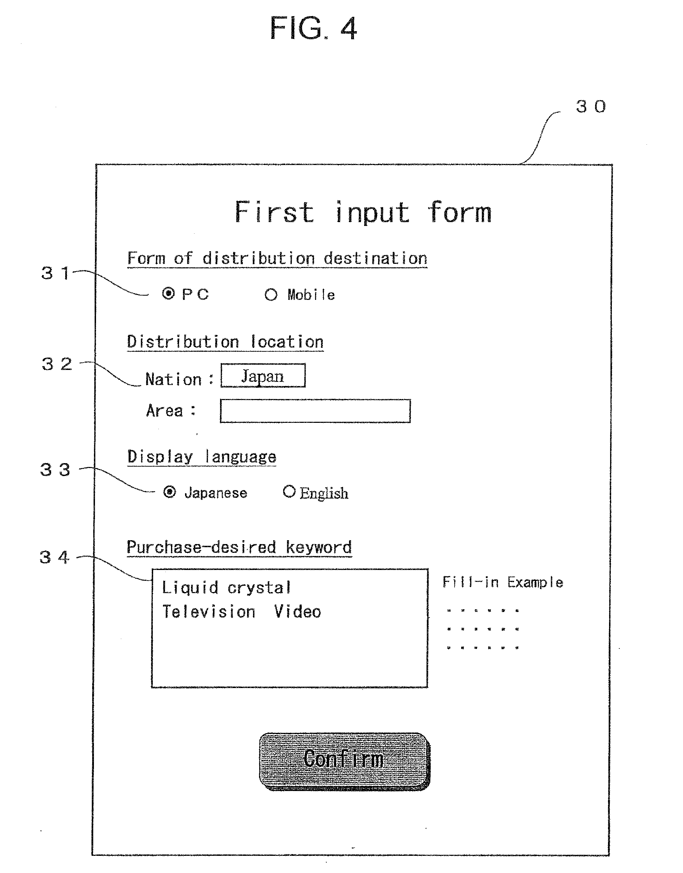

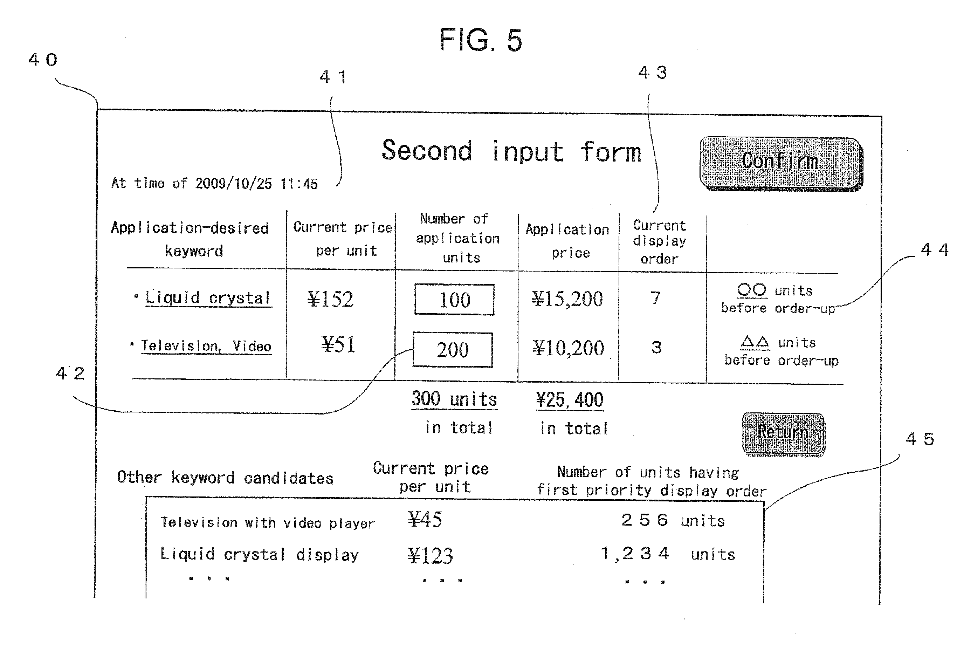

FIG. 3 is a flowchart showing an exemplary advertisement keyword application by the advertisement display server device 10. FIG. 4 is a schematic diagram showing an exemplary first input form in the advertiser terminal device 20. FIG. 5 is a schematic diagram showing an exemplary second input form in the advertiser terminal device 20.

At first, the advertiser accesses a Web page for keyword application managed by the advertisement display server device 10 for placing an advertisement of product or service on the Internet. As shown in FIG. 3, the control part 11 in the advertisement display server device 10 transmits data on the first input form for the advertisement keyword application to the advertiser terminal device 20 (step S1). Specifically, data for displaying the first input form 30 as shown in FIG. 4 on the display part 21 in the advertiser terminal device 20 is transmitted.

The first input form 30 has a select column 31 for selecting a form of distribution destination, a distribution location column 32 for specifying a distribution location, a language column 33 for selecting a display language, and a keyword fill-in column 34 for filling in an application-desired keyword.

The first input form 30 is displayed on the display part 21 in the advertiser terminal device 20 having received the data on the first input form 30. The advertiser fills in required items in the first input form 30. The advertiser terminal device 20 selects the form of distribution destination from a personal computer (PC) or a mobile terminal such as cell phone in the select column 31. In the distribution location column 32, a nation or area to which the advertisement is to be distributed is selected. In the language column 33, a language in which the advertisement is to be displayed is selected. In the keyword fill-in column 34, an application-desired keyword is filled in such as one word of "liquid-crystal" or a combination of "television, video." After the fill-in, the advertiser clicks a confirm button on the first input form 30, and the advertiser terminal device 20 transmits the selected data or the data having the advertisement keyword or the like filled in to the advertisement display server device 10. The data on the terminal kind of PC or mobile and the data on the distribution location are utilized for deciding the terminal kind or the distribution location based on a transmission source IP address set in an IP head of an access request, or a user's behavior history.

Then, the advertisement display server device 10 receives the advertisement keyword from the advertiser terminal device 20 (step S2). Specifically, the control part 11 in the advertisement display server device 10 receives the selected data or the data having the advertisement keyword filled in. In this way, the advertisement display server device 10 functions as an exemplary advertisement keyword receiving means that receives the advertisement keyword from the advertiser terminal device 20.

Then, the advertisement display server device 10 calculates an application unit price applied for the advertisement keyword (step S3). Specifically, the control part 11 calculates a price per advertisement keyword application unit (application unit price) based on the total number of application units applied for the advertisement keyword from the advertiser terminal devices 20. The application for the advertisement keyword is made per applicable basic unit (application unit) and a price (application unit price) is set for the application unit. An applicant (advertiser) applies for the advertisement keyword based on how many units to apply for (the number of application units). The application unit price is set to change depending on an advertiser application situation (advertiser behavior). For example, other advertisers may have already applied for the same advertisement keyword, and the advertisement display server device 10 finds the total number of application units, and reflects the total number of application units on the application unit price to change the application unit price. As an exemplary change in application unit price, as the total number of application units increases, the application unit price increases. In this case, the former applicants can obtain a larger number of application units at a lower application unit price.

The calculation of the application unit price may be based on a sum of total application units for each advertisement keyword, which is a function of the number of application units from each advertiser terminal device 20, based on a sum obtained by weighting each advertiser, based on a multiplication of the numbers of application units, or based on a geometric mean or harmonic mean of the numbers of application units. As described later, the priority order for displaying the advertisement is set to be higher as the number of acquired application units is larger. An initial value of the application unit price is set by previously determining a reference price of an advertisement spot, for example. The application unit price may be points not money.

In this way, the advertisement display server device 10 functions as an exemplary application unit price calculating means that calculates a price per advertisement keyword application unit based on the number of application units for the advertisement keyword from the advertiser terminal devices. The advertisement display server device 10 functions as the exemplary application unit price calculating means that calculates the application unit price based on the total number of application units from the advertiser terminal devices. The advertisement display server device 10 functions as the exemplary application unit price calculating means that increases the application unit price depending on the increase in the total number of application units.

Then, the control part 11 transmits the data on the second input form for displaying the application unit price and filling in the number of application units to the advertiser terminal device 20 (step S4). Specifically, the data for displaying the second input form 40 as shown in FIG. 5 on the display part 21 in the advertiser terminal device 20 is transmitted.

The second input form 40 has a display column 41 of an application unit price (current price per unit), an input column 42 for inputting the number of application units, an order display column 43 for indicating a current display priority order, a necessary unit number display column 44 for indicating the number of necessary application units by increment of the priority order, and a display column 45 for displaying other keyword candidates and information. In the second input form 40, the number of application units is indicated as "the number of application units" utilizing the number of units used as transaction unit of investment trust, and the application unit price is indicated as "price per unit."

Then, the second input form 40 is displayed on the display part 21 in the advertiser terminal device 20 having received the data on the second input form 40. The advertiser fills in the number of application units for each advertisement keyword or keyword group in the second input form 40 while referring to the application unit price or priority order. The information on company name and address for specifying an advertiser and the information on advertisement contents such as title of advertisement to be displayed, abstract and URL (Uniform Resource Locator) are also filled in. After the fill-in, a confirm button of the second form 40 is clicked, and the information on the number of application units is transmitted from the advertiser terminal device 20 to the advertisement display server device 10. If the applicant browses other keyword candidates and wants to apply for other keyword, he clicks the "return" button and returns to the page of the first input form 30. In this way, the advertisement display server device 10 functions as an exemplary application unit price transmitting means that transmits the information on the application unit price to the advertiser terminal device 20.

Then, the advertisement display server device 10 receives the information on the number of application units from the advertiser terminal device 20 (step S5). Specifically, the control part 11 receives the information on the number of application units or the information on advertiser or advertisement contents. In this way, the advertisement display server device 10 functions as an exemplary application unit number receiving means that receives the information on the number of application units for the advertisement keyword at the application unit price from the advertiser terminal device 20.

Then, the advertisement display server device 10 stores the advertisement keyword, the number of application units, the advertiser and the advertisement contents in a mutually-associated manner (step S6). Specifically, for example, the control part 11 constructs, in the database 15, an advertiser, advertisement contents of the advertiser, the number of application units applied for by the advertiser, and the total number of application units of each advertiser, in association with the advertisement keyword. In this way, the advertisement display server device 10 functions as an exemplary storing means that stores the advertisement keyword, the number of application units and the advertisement contents in a mutually-associated manner.

For receiving the application for the advertisement keyword, an application deadline such as weekly or monthly may be provided, an application deadline for each advertisement keyword may be provided, an application limit (a limitation on the number of application units) may be provided for each advertisement keyword or advertisement keyword group thereby to permit the application up to the application limit, an application may be always received thereby to vary the application unit price in real-time, or these may be used together.

The operational example for displaying the advertisement contents by the advertisement display server device 10 will be described below with reference to the drawings.

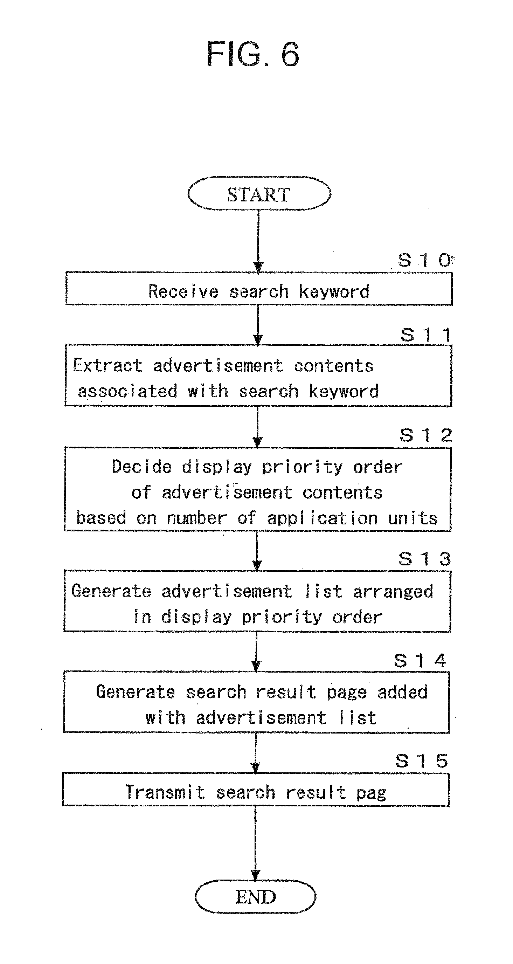

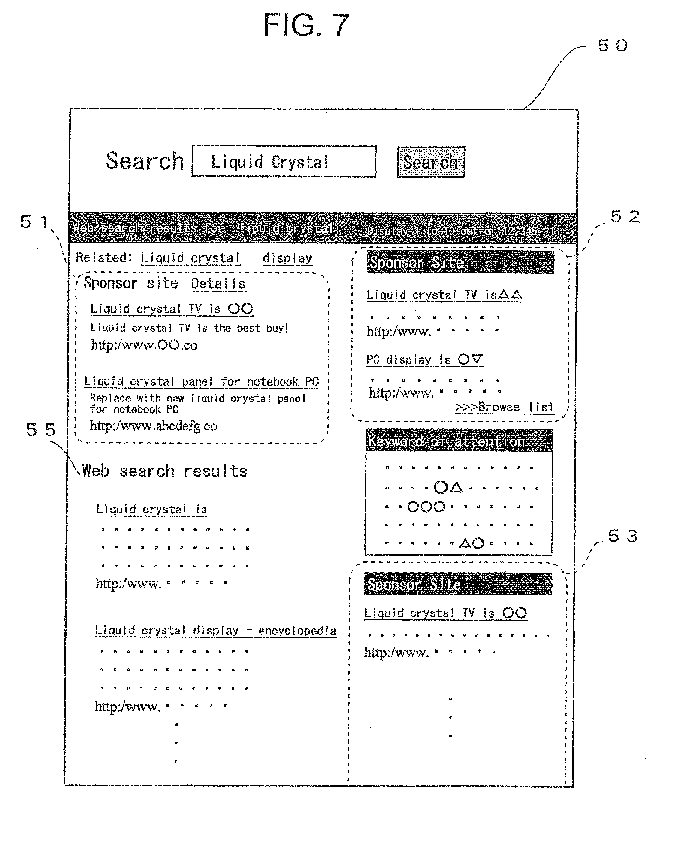

FIG. 6 is a flowchart showing an exemplary advertisement list generation by the advertisement display server device 10. FIG. 7 is a schematic diagram showing an exemplary search result page on the user terminal device 25.

At first, information on the search keyword input by the user who wants to make a search is transmitted from the user terminal device 25 to the advertisement display server device 10. As shown in FIG. 6, the advertisement display server device 10 receives the search keyword from the user terminal device 25 (step S10). In this way, the advertisement display server device 10 functions as an exemplary search keyword receiving means that receives the search keyword from the user terminal device 25.

Then, the advertisement display server device 10 extracts advertisement contents associated with the search keyword (step S11). Specifically, the control part 11 in the advertisement display server device 10 searches an advertisement keyword which includes the search keyword, coincides therewith or is similar thereto from the database 15, and decides the advertisement keyword. The control part 11 extracts the number of application units and the advertisement contents corresponding to the advertisement keyword. In this way, the advertisement display server device 10 functions as an exemplary advertisement extracting means that when receiving the search keyword, decides the advertisement keyword associated with the search keyword with reference to the storing means, and extracts the number of application units and the advertisement contents stored in association with the decided advertisement keyword.

Then, the advertisement display server device 10 decides a display priority order of the advertisement contents based on the number of application units (step S12). Specifically, the control part 11 decides the display priority order in the order of advertisement contents having a larger number of application units with reference to the database 15. In this way, the advertisement display server device 10 functions as an exemplary display priority order deciding means that decides the display priority order for displaying the extracted advertisement contents based on the number of application units with reference to the storing means.

Then, the advertisement display server device 10 generates an advertisement list in which the extracted advertisement contents are arranged in accordance with the display priority order (step S13). In this way, the advertisement display server device 10 functions as an exemplary advertisement list generating means that generates the advertisement list in which the extracted advertisement contents are arranged in the display priority order.

Then, the advertisement display server device 10 generates a search result page added with the advertisement list (step S14). Specifically, the control part 11 generates a search result page 50 described in the HTML (Hyper Text Markup Language) form as shown in FIG. 7. In the advertisement display order, for example, as shown in FIG. 7, the advertisement contents in the first priority order, the advertisement contents in the second priority order, the advertisement contents in the third priority order, and so on are sequentially assigned to the first in a first advertisement spot 51, the second in the first advertisement spot 51, the first in a second advertisement spot 52, and so on. In this way, the advertisement display server device 10 functions as an exemplary search result page generating means that generates a search result page in which the advertisement list is added to the search results based on the search keyword.

The advertiser may generate the advertisement list per advertisement spot 51, 52, 53 by selecting the first advertisement spot 51, the second advertisement spot 52 or a third advertisement spot 53 to display the advertisement list in the first input form 30 or the second input form 40. In this case, the application unit price may be changed depending on the advertisement spot or the advertisement keyword may be applied for each advertisement spot 51, 52, 53.

Then, the advertisement display server device 10 transmits the search result page to the user terminal device 25 (step S15). The search result page as shown in FIG. 7 is displayed on the display part 26 in the user terminal device 25 having received the search result page. In this way, the advertisement display server device 10 functions as an exemplary search result transmitting means that transmits the search result page to the user terminal device 25.

In this way, according to the present embodiment, the advertisement keyword is received from the advertiser terminal device 20, the application unit price which is a price per advertisement keyword application unit is calculated based on the number of application units applied for the advertisement keyword from the advertiser terminal devices 20, the information on the application unit price is transmitted to the advertiser terminal device 20, the information on the number of application units applied for the advertisement keyword at the application unit price is received from the advertiser terminal device 20, the advertisement keyword, the number of application units and the advertisement contents are stored in the database 15 in a mutually-associated manner, the search keyword is received from the user terminal device 25, the advertisement keyword associated with the search keyword is decided with reference to the database 15 when the search keyword is received, the number of application units and the advertisement contents stored in association with the decided advertisement keyword are extracted, and the display priority order for displaying the extracted advertisement contents is decided based on the number of application units with reference to the database 15 so that the unit price per application unit varies based on the total number of application units and the advertisement display priority order is decided based on the number of application units not based on the bid, even when funds for the application are not enough, if an advertiser obtains many application units at a low unit price, the advertiser can obtain the advertisement keyword having a high display priority order. Therefore, the application chance is given to many advertisers, thereby enhancing advertiser's convenience.

When the advertisement list in which the extracted advertisement contents are arranged in accordance with the display priority order is generated, the search result page in which the advertisement list is added to the search results responsive to the search keyword is generated and the search result page is transmitted to the user terminal device, the advertisement contents having a larger number of application units are displayed at a position in the Web page which is more easily browsed by the user, thereby enhancing the advertising effect meeting the advertiser's desire.

When the application unit price is calculated based on the total number of application units from the advertiser terminal devices 20, the number of application units of each advertiser is easily reflected on the application unit price and the advertiser can easily expect the application unit price to an extent.

When the application unit price is increased in response to the increase in the total number of application units, the application unit price is a monotonically increasing function for the total number of application units, and the former applicants can purchase the advertisement keyword at a lower price. Additionally, the applicants can obtain the chance to apply for a larger number of application units within a preset budget depending on a timing. Thus, the advertiser can obtain high profitability for the investment, thereby enhancing the advertiser's convenience.

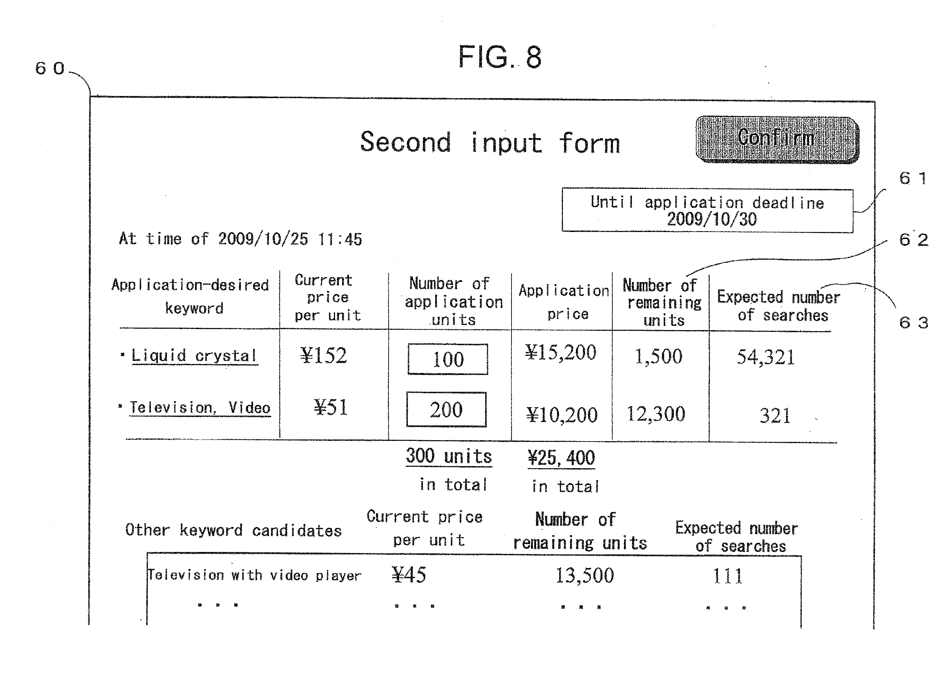

The advertisement display server device 10 may transmit the information on the keyword application deadline to the advertiser terminal device 20. Specifically, as shown in FIG. 8, a second input form 60 is provided with an application deadline display column 61 for displaying an application deadline. The application deadline is provided and thus the time to confirm the final display priority order is made clear for the advertiser, thereby enhancing the advertiser's convenience. In this way, the advertisement display server device 10 functions as an exemplary application period transmitting means that transmits the information on the keyword application deadline to the advertiser terminal device 20.

The applicable number of application units can be restricted for each advertisement keyword. Specifically, as shown in FIG. 8, the number of remaining units (the number of remaining application units) is displayed in a display column 62. Alternatively, the maximum number of issued application units may be displayed. The maximum number of application units is set so that the application unit price can be prevented from infinitely increasing and the application unit price can be easily controlled, thereby enhancing the advertiser's convenience. If the number of application units is determined, the advertiser can know the number of remaining application units and can easily expect a variation in the application unit price, thereby enhancing the advertiser's convenience. In this way, the advertisement display server device 10 functions as an exemplary application unit number limiting means that limits the applicable number of application units for each advertisement keyword.

Alternatively, the set maximum number of application units may be only held inside the advertisement display server device 10 instead of being displayed in the advertiser terminal device 20. In this case, it is possible to prevent a small number of advertisers from applying for all the application units.

As shown in FIG. 8, an expected search number display column 63 may be provided for indicating the expected number of searches. The advertiser can easily infer the application effects, thereby enhancing the advertiser's convenience.

The application unit price may be calculated based on the number of application units and a frequency of advertisement keyword searches. In this case, the application unit price is a function of the number of application units and the frequency of advertisement keyword searches. For example, a keyword searched more frequently is set at a larger initial value of the application unit price. Thereby, the application unit price suitable for the advertising effect can be set. In this way, the advertisement display server device 10 functions as an exemplary application unit price calculating means that calculates the application unit price based on the number of application units and the frequency of advertisement keyword searches.

Additionally, the second input form 40 may display therein the application history indicating that an advertisement keyword has been applied for within the period, the accumulated number of application units, the accumulated application price and the like. In the case, how many application units have been applied for at which application unit price or how many application units have been applied for in total can be easily seen, and thus the advertiser's convenience is enhanced. In the second input form 40, the application unit price may be displayed for "liquid crystal" and "television, video" together, and number of application units may be collectively applied for them. The collective application is possible and thus the advertiser's convenience is enhanced.

### (Second embodiment)

An advertisement display system according to a second embodiment of the present invention will be described below with reference to the drawings. A structure of the advertisement display system according to the present embodiment is similar to that of the advertisement display system according to the first embodiment, and like reference numerals are denoted to like reference parts similar to those in the first embodiment and thereby the operations will be described. This will be applicable to other embodiments and variants.

The operations of the second embodiment according to the present invention will be described with reference to the drawings.

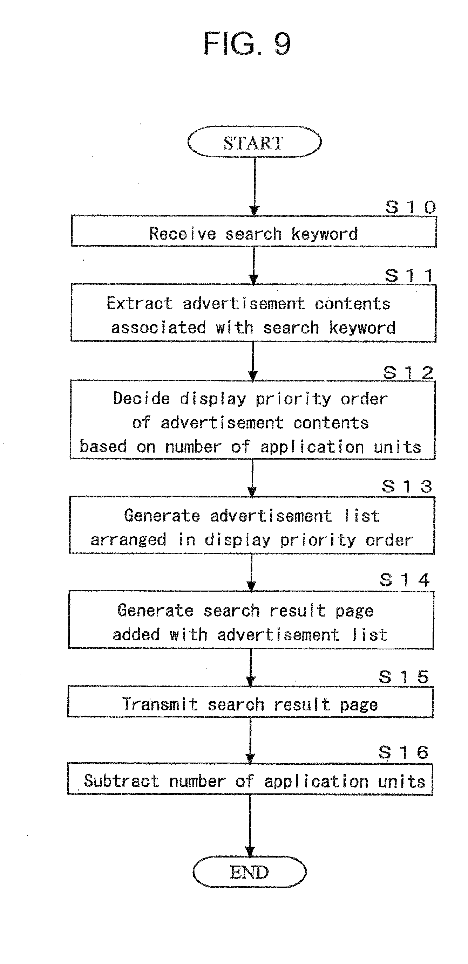

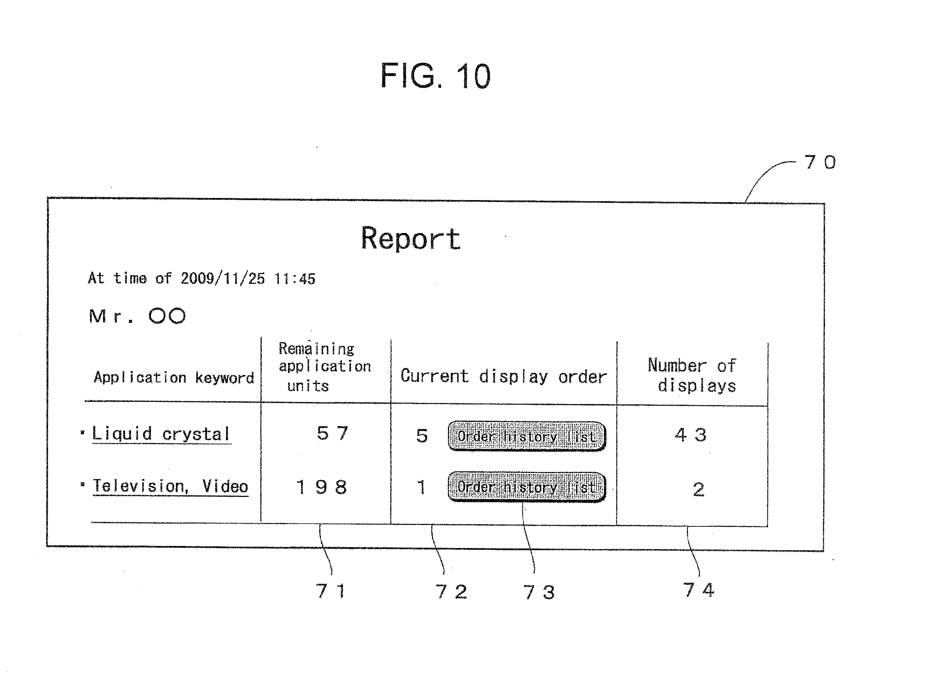

FIG. 9 is a flowchart showing an exemplary advertisement list generation by an advertisement display server device according to the second embodiment of the present invention. FIG. 10 is a schematic diagram showing a report of an advertisement display result.

As shown in FIG. 9, step S10 to step S15 are the same as those in the first embodiment. After the advertisement display server device 10 transmits the search result page to the user terminal device 25 in response to the user's search request in step S15, the advertisement display server device 10 subtracts the number of application units stored in the database 15 for the described advertisement contents (step S16). Specifically, the control part 11 in the advertisement display server device 10 subtracts the number of application units stored in the database 15 each time the advertisement contents are displayed. The contents for the subtraction are a predetermined number of advertisement contents arranged in the advertisement list. The advertisement display server device 10 decides a display priority order of the advertisement contents based on the subtracted number of application units in step S12 when a new search request is made. Along with the decrease in the number of application units, the display priority order of the advertisement contents displayed in the search result page 50 lowers and the display priority order of the advertisement contents not displayed increases.

As shown in FIG. 10, the advertisement display server device 10 generates a Web-browsable report page 70 for the advertisers. The report page 70 has a display column 71 for the number of remaining application units, a display order column 72, a button 73 for browsing a list of order histories, and a display number display column 74 indicating the number of displays. The remaining display column 71 displays therein the current number of subtracted application units, the display order column 72 displays the current display order therein, and the display number display column 74 displays the number of displays displayed in response to the search request therein. When the button 73 is clicked, the history of the change in the display order is displayed as log data.

In this way, the advertisement display server device 10 functions as an exemplary application unit number subtracting means that when a predetermined number of advertisement contents are arranged in the advertisement list, subtracts the number of application units stored in the storing means in association with the advertisement contents arranged in the advertisement list.

When the advertisement contents are arranged in the advertisement list and the number of application units stored in the database 15 is subtracted therefrom, the advertiser who first applies for and acquires a large number of application units can keep the total purchase cost low, but even an advertiser having advertisement contents for which the total number of application units is small can obtain the chance to display the advertisement contents and the chance to display more advertisement contents can be increased. The chance for application can be given to many advertisers.

The subtracted number of application units may be reflected on the application unit price. In this case, the application unit price can be varied in real-time in response to the user's search result.

The advertisement display server device 10 may subtract the number of application units in response to the display priority order. Specifically, the advertisement contents having a higher priority order are more subtracted in the number of application units. In this case, the chance to display more advertisement contents increases and a sense of fairness between the advertisers further increases. In this way, the advertisement display server device 10 functions as an exemplary application unit number subtracting means that decides the number of units to be subtracted from the number of application units in the display priority order.

Further, the present invention is not limited to the above embodiments. The above embodiments are exemplary, and any embodiments having substantially the same structure and achieving the same operational effects as the technical spirit described in claims of the present invention are encompassed in the technical field of the present invention.

### DESCRIPTION OF REFERENCE NUMERALS

3: Network
10: Advertisement display server device
15: Database (storing means)
20: Advertiser terminal device
25: User terminal device

## Claims

1. An advertisement display server device connected to a plurality of advertiser terminal devices and a plurality of user terminal devices via a network, comprising:
an advertisement keyword receiving means that receives an advertisement keyword from the advertiser terminal devices;
an application unit price calculating means that calculates an application unit price which is a price per application unit of the advertisement keyword based on the number of application units applied for the advertisement keyword from the advertiser terminal devices;
an application unit price transmitting means that transmits information on the application unit price to the advertiser terminal devices;
an application unit number receiving means that receives information on the number of application units applied for the advertisement keyword at the application unit price from the advertiser terminal devices;
a search keyword receiving means that receives a search keyword from the user terminal devices;
an advertisement extracting means that when receiving the search keyword, decides an advertisement keyword associated with the search keyword with reference to a storing means that stores the advertisement keyword, the number of application units, and advertisement contents in a mutually-associated manner, and extracts the number of application units and advertisement contents stored in association with the decided advertisement keyword; and
a display priority order deciding means that decides a display priority order for displaying the extracted advertisement contents based on the number of application units.

2. The advertisement display server device according to claim 1, further comprising:
an advertisement list generating means that generates an advertisement list in which the extracted advertisement contents are arranged in the display priority order;
a search result page generating means that generates a search result page in which the advertisement list is added to search results based on the search keyword; and
a search result transmitting means that transmits the search result page to the user terminal devices.

3. The advertisement display server device according to claim 2, wherein the advertisement list generating means arranges a predetermined number of advertisement contents in the advertisement list, the advertisement display server device further comprising:
an application unit number subtracting means that when advertisement contents are arranged in the advertisement list, subtracts the number of application units stored in the storing means in association with the advertisement contents arranged in the advertisement list.

4. The advertisement display server device according to claim 3, wherein the application unit number subtracting means decides the number of units to be subtracted from the number of application units in response to the display priority order.

5. The advertisement display server device according to any one of claims 1 to 4, further comprising:
an application unit number limiting means that limits the number of application units applicable for each advertisement keyword.

6. The advertisement display server device according to any one of claims 1 to 5, wherein the application unit price calculating means calculates the application unit price based on the total number of application units from the advertiser terminal devices.

7. The advertisement display server device according to claim 6, wherein the application unit price calculating means increases the application unit price in response to an increase in the total number of application units.

8. The advertisement display server device according to any one of claims 1 to 7, wherein the application unit price calculating means calculates the application unit price based on the number of application units and a search frequency of the advertisement keyword.

9. The advertisement display server device according to any one of claims 1 to 8, further comprising:
an application period transmitting means that transmits information on an application deadline of the keyword to the advertiser terminal devices.

10. The advertisement display server device according to any one of claims 1 to 9, further comprising:
a storing means that stores the advertisement keyword, the number of application units, and advertisement contents in a mutually-associated manner.

11. An advertisement display method of an advertisement display server device connected to a plurality of advertiser terminal devices and a plurality of user terminal devices via a network, comprising:
an advertisement keyword receiving step of receiving an advertisement keyword from the advertiser terminal devices;
an application unit price calculating step of calculating an application unit price which is a price per application unit of the advertisement keyword based on the number of application units applied for the advertisement keyword from the advertiser terminal devices;
an application unit price transmitting step of transmitting information on the application unit price to the advertiser terminal devices;
an application unit number receiving step of receiving information on the number of application units applied for the advertisement keyword at the application unit price from the advertiser terminal devices;
a search keyword receiving step of receiving a search keyword from the user terminal devices;
an advertisement extracting step of, when receiving the search keyword, deciding an advertisement keyword associated with the search keyword with reference to a storing means that stores the advertisement keyword, the number of application units, and advertisement contents in a mutually-associated manner, and extracting the number of application units and advertisement contents stored in association with the decided advertisement keyword; and
a display priority order deciding step of deciding a display priority order for displaying the extracted advertisement contents based on the number of application units.

12. A program for an advertisement display server device connected to a plurality of advertiser terminal devices and a plurality of user terminal devices via a network, which causes a computer to function as:
an advertisement keyword receiving means that receives an advertisement keyword from the advertiser terminal devices;
an application unit price calculating means that calculates an application unit price which is a price per application unit of the advertisement keyword based on the number of application units applied for the advertisement keyword from the advertiser terminal devices;
an application unit price transmitting means that transmits information on the application unit price to the advertiser terminal devices;
an application unit number receiving means that receives information on the number of application units applied for the advertisement keyword at the application unit price from the advertiser terminal devices;
a search keyword receiving means that receives a search keyword from the user terminal devices;
an advertisement extracting means that when receiving the search keyword, decides an advertisement keyword associated with the search keyword with reference to a storing means that stores the advertisement keyword, the number of application units, and advertisement contents in a mutually-associated manner, and extracts the number of application units and advertisement contents stored in association with the decided advertisement keyword; and
a display priority order deciding means that decides a display priority order for displaying the extracted advertisement contents based on the number of application units.

13. A computer-readable recording medium recording therein a program for an advertisement display server device connected to a plurality of advertiser terminal devices and a plurality of user terminal devices via a network, the program causing a computer to function as:
an advertisement keyword receiving means that receives an advertisement keyword from the advertiser terminal devices;
an application unit price calculating means that calculates an application unit price which is a price per application unit of the advertisement keyword based on the number of application units applied for the advertisement keyword from the advertiser terminal devices;
an application unit price transmitting means that transmits information on the application unit price to the advertiser terminal devices;
an application unit number receiving means that receives information on the number of application units applied for the advertisement keyword at the application unit price from the advertiser terminal devices;
a search keyword receiving means that receives a search keyword from the user terminal devices;
an advertisement extracting means that when receiving the search keyword, decides an advertisement keyword associated with the search keyword with reference to a storing means that stores the advertisement keyword, the number of application units, and advertisement contents in a mutually-associated manner, and extracts the number of application units and advertisement contents stored in association with the decided advertisement keyword; and
a display priority order deciding means that decides a display priority order for displaying the extracted advertisement contents based on the number of application units.
